# EUROPEAN PATENT APPLICATION

(11) **EP 3 418 650 A1**
(43) Date of publication of application: **26.12.2018**
(21) Application number: 18175137.1
(22) Date of filing: 30.05.2018
(51) Int. Cl.: F24H 4/02, F25B 13/00, F24F 5/00, F24F 1/02, F24F 13/20, F24F 13/30, F24F 13/02

(54) **REFRIGERATING APPARATUS**

(30) Priority: 21.06.2017 JP 2017121169
(71) Applicant: Hitachi-Johnson Controls Air Conditioning, Inc., Tokyo 105-0022 (JP)
(72) Inventor: IWAI, Junichi, Tokyo, 105-0022 (JP); ITO, Koji, Tokyo, 105-0022 (JP); AOYAGI, Atsuki, Tokyo, 105-0022 (JP); KOMATSU, Mitsuru, Tokyo, 105-0022 (JP)
(74) Representative: MERH-IP Matias Erny Reichl Hoffmann Patentanwälte PartG mbB

(57) **Abstract**

Provided is a refrigerating apparatus 20 capable of reducing a space for drawing a local water pipe and saving a space for installation. A refrigerating apparatus 20 includes: a refrigerating cycle unit including a compressor 5, an air heat exchanger 2, a blower 4, a decompressor 7, and a water heat exchanger 8; and a housing 13 that accommodates the refrigerating cycle unit. The housing 13 has a bottom base 9 in which the water heat exchanger 8 is disposed and in which a piping opening 18 for passing water pipes (apparatus water pipes and local water pipes) connected to the water heat exchanger 8 is formed. The housing 13 has a front surface as a maintenance surface, left and right side surfaces, and a back surface, and the air heat exchanger 8 is provided over an entire surface of the left and right side surfaces and the back surface of the housing 13.

## Description

The present invention relates to a refrigerating apparatus used as a heat source machine for air-conditioning or industrial purposes.

### BACKGROUND

A conventional refrigerating apparatus is configured such that a water pipe connected to a water heat exchanger faces any one of a front surface, left and right side surfaces, and a back surface of a housing so as to be connected to a local water pipe as disclosed in Japanese Patent Application Publication No. 2013-160445, for example.

### SUMMARY

However, in the refrigerating apparatus disclosed in Japanese Patent Application Publication No. 2013-160445, it is necessary to provide a local water pipe drawing space around the unit. Moreover, since the water pipe faces in one direction of the housing, when the connected local water pipe is drawn toward a side surface of the unit or the opposite side of the unit, the water pipe needs to go half around the unit at most.

Therefore, an object of the present invention is to provide a refrigerating apparatus capable of reducing a space for drawing a local water pipe and saving a space for installation.

In order to attain the object, a refrigerating apparatus according to an embodiment of the present invention includes: a refrigerating cycle unit including a compressor, an air heat exchanger, a blower, a decompressor, and a water heat exchanger; and/or a housing that accommodates the refrigerating cycle unit, wherein the housing has a bottom base in which the water heat exchanger is disposed and in which a piping opening for passing water pipes connected to the water heat exchanger is formed.

### BRIEF DESCRIPTION OF DRAWINGS

FIG. 1 is a system diagram of a refrigerating system of a refrigerating apparatus according to an embodiment of the present invention;
FIG. 2 is a perspective view of the refrigerating apparatus according to the embodiment of the present invention;
FIG. 3 is a plan view illustrating a drawing state of a local water pipe connected to a water pipe of a water heat exchanger; and
FIG. 4 is a plan view illustrating a modification of an arrangement of the air heat exchanger.

### DETAILED DESCRIPTION OF THE EMBODIMENT

Hereinafter, a refrigerating apparatus (an air-conditioning water cooling unit) 20 according to an embodiment of the present invention will be described. The refrigerating apparatus 20 is used as a heat source machine for air-conditioning or industrial purposes.

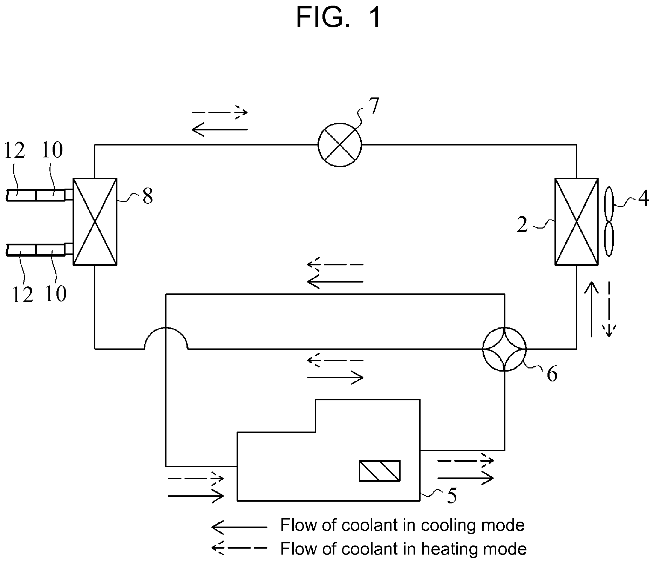

FIG. 1 is a system diagram of a refrigerating system of the refrigerating apparatus 20 according to the embodiment of the present invention.

As illustrated in FIG. 1, the refrigerating system includes a compressor 5, a four-way valve 6, a decompressor 7, a water heat exchanger 8, an air heat exchanger 2, and a blower 4. The compressor 5, the four-way valve 6, the decompressor 7, the water heat exchanger 8, the air heat exchanger 2, and the blower 4 form a refrigerating cycle unit.

The compressor 5 is configured as a screw compressor, a scroll compressor, or the like and compresses a coolant gas. The four-way valve 6 switchably supplies a compressed coolant gas discharged from the compressor 5 to the air heat exchanger 2 or the water heat exchanger 8. The decompressor 7 is configured as an electronic expansion valve, a capillary tube, or the like and decompresses a coolant. The water heat exchanger 8 cools or heats water such as cool water or hot water circulated and supplied from an indoor unit or the like. Apparatus water pipes 10 are connected to the water heat exchanger 8. The air heat exchanger 2 exchanges heat between the coolant and the outside air supplied by the blower 4.

A cooling mode of the refrigerating system will be described. A sold-line arrow illustrated in FIG. 1 indicates the flow of a coolant in a cooling mode.

The high-temperature and high-pressure coolant gas discharged from the compressor 5 flows into the air heat exchanger 2 under the control of the four-way valve 6, condenses by exchanging heat with the outside air, and flows into the water heat exchanger 8 by being decompressed and expanded by the decompressor 7. In the water heat exchanger 8, water (cool water) circulated and supplied from an indoor unit (not illustrated) such as an air-conditioning unit and the decompressed coolant exchange heat, and the water is cooled and returned to the indoor unit to perform air-conditioning or the like. Moreover, the coolant is evaporated by stealing heat from the water supplied to the water heat exchanger 8 and is taken into the inlet side of the compressor 5 via the four-way valve 6. The coolant is compressed by the compressor 5 again, whereby a refrigerating cycle is formed.

A heating mode of the refrigerating system will be described. A broken-line arrow in FIG. 1 indicates the flow of a coolant in a heating mode.

The high-temperature and high-pressure coolant gas discharged from the compressor 5 flows into the water heat exchanger 8 under the control of the four-way valve 6 and heats the water (hot water) circulated and supplied from the water heat exchanger while condensing itself. The coolant condensed by the water heat exchanger 8 flows into the air heat exchanger 2 after being decompressed and expanded by the decompressor 7 and is evaporated by exchanging heat with the outside air. The evaporated coolant is taken into the inlet side of the compressor 5 via the four-way valve 6. The coolant is compressed by the compressor 5 again whereby a refrigerating cycle is formed.

In addition to the compressor 5, the four-way valve 6, the air heat exchanger 2, the decompressor 7, and the water heat exchanger 8, the refrigerating system of the present embodiment further includes a coolant pipe or the like that connects these components. Moreover, the air heat exchanger 2 is configured as a fin tube-type heat exchanger or the like so that the blower 4 blows air between fins to exchange heat between a coolant and the outside air. Moreover, although water is supplied to the water heat exchanger 8 of the present embodiment as a heating medium, brine may be used instead of water.

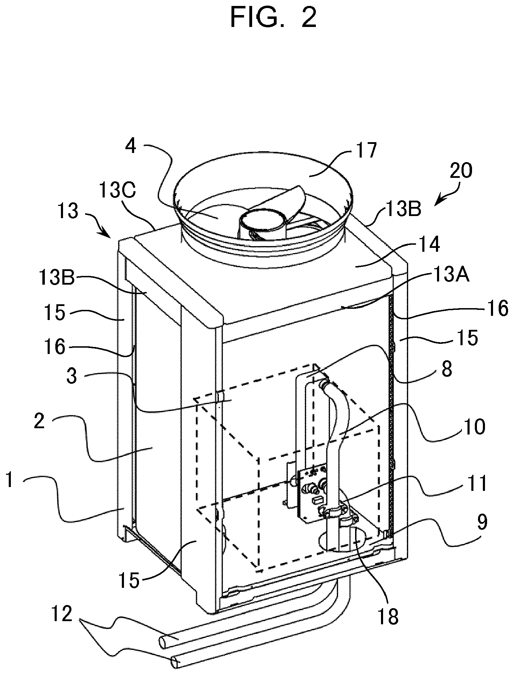

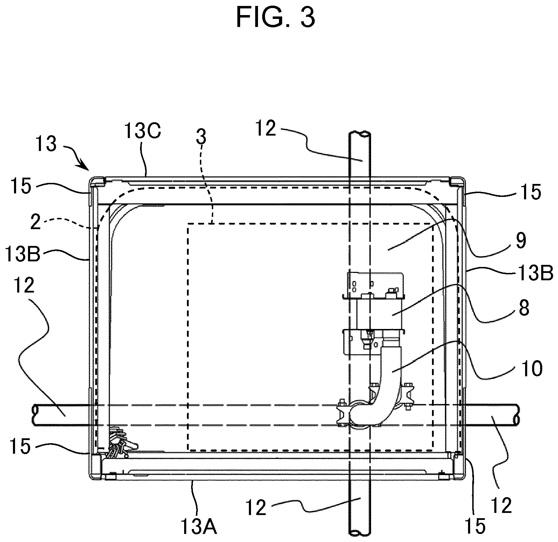

Next, the structure of the refrigerating apparatus 20 according to the embodiment of the present invention will be described with reference to FIGS. 2 and 3.

FIG. 2 is an external perspective view of the refrigerating apparatus 20. FIG. 3 is a plan view illustrating a drawing state of local water pipes 12 connected to the apparatus water pipes 10.

As illustrated in FIG. 2, the refrigerating apparatus 20 has a housing 13 that accommodates the refrigerating cycle unit described in FIG. 1. The housing 13 has an approximately rectangular parallelepiped shape and includes a top plate 14, a bottom base 9, and four frame members 15. The top plate 14 and the bottom base 9 have a rectangular shape, the frame members 15 are disposed in four corners of these members 14 and 9, and the top plate 14, the bottom base 9, and the frame members 15 are combined together to form the housing 13. With the top plate 14, the bottom base 9, and the frame members 15, openings 16 are formed in the four surfaces (a front surface 13A, left and right side surfaces 13B, and a back surface 13C) of the housing 13 are formed (only two openings 16 are illustrated in FIG. 2).

The blower 4 is attached to the top plate 14 and a ventilation hole cover 17 is provided to surround the blower 4. The air heat exchanger 2 is provided over an entire surface of three surfaces (the left and right side surfaces 13B and the back surface 13C) excluding the front surface 13A (an obliquely right-bottom surface in FIG. 2 and a lower surface in FIG. 3) of the housing 13 and is exposed outside via the corresponding opening 16. Moreover, an operation panel (not illustrated) is attached to the front surface 13A of the housing 13. A piping opening 18 is formed in the bottom base 9.

A machine room 3 in which a cycle device such as the compressor 5 and the like that form the refrigerating cycle unit described in FIG. 1 is formed in a space formed by the air heat exchanger 2 and the bottom base 9. Only the water heat exchanger 8 and the apparatus water pipes 10 provided in the machine room 3 are illustrated in FIGS. 2 and 3. Each apparatus water pipes 10 have such a shape that the apparatus water pipe 10 extends in a horizontal direction from the water heat exchanger 8 and is bent toward the piping opening 18 formed in the bottom base 9.

In a state in which the refrigerating apparatus 20 is set on a local foundation, the local water pipes 12 are inserted from the piping opening 18 and are connected to the apparatus water pipes 10 by a housing-type pipe connector 11, respectively. Rather than using the housing-type pipe connector 11, a flange may be provided in each apparatus water pipe 10 and each local water pipe 12 and the flanges may be connected. Moreover, in the present embodiment, although the apparatus water pipes 10 and the local water pipes 12 are connected inside the housing 13 of the refrigerating apparatus 20, the apparatus water pipes 10 may protrude from the piping opening 18 and the apparatus water pipes 10 and the local water pipes 12 may be connected in a lower part of the housing 13 of the refrigerating apparatus 20.

As illustrated in FIG. 3, the local water pipes 12 connected to the apparatus water pipes 10 are drawn toward any one of the front, rear, left, and right sides of the refrigerating apparatus 20 on the lower side of the bottom base 9 of the refrigerating apparatus 20 on the basis of the position of the indoor unit (not illustrated) or the like. Although the local water pipes 12 are drawn in the front-rear direction and the left-right direction in FIG. 3, the drawing direction may intersect these directions.

According to the refrigerating apparatus 20, the housing 13 has the bottom base 9 in which the water heat exchanger 8 is disposed and the piping opening 18 for passing the water pipes (the apparatus water pipes 10 and the local water pipes 12) connected to the water heat exchanger 8 is formed. According to this configuration, since the local water pipes 12 can be arranged in the lower part of the housing 13, the drawing direction of the local water pipe 12 is not particularly limited, the local water pipes 12 can be drawn in any direction of the 360-degree omnidirection of the front-rear direction and the left-right direction when seen from such a plan view as FIG. 3. In this way, it is possible to reduce the drawing space of the local water pipe 12 and to save the installation space of the refrigerating apparatus 20.

The air heat exchanger 2 is provided over an entire surface of the left and right side surfaces 13B and the back surface 13C. Since the local water pipes 12 are disposed in the lower part of the bottom base 9, the front surface of the front surface 13A can be used as a maintenance surface and the maintenance workability can be improved.

While a preferred embodiment of the present invention has been described, the present invention is not limited to the above-described embodiment, and various changes in design can be made without departing from the spirit of the present invention.

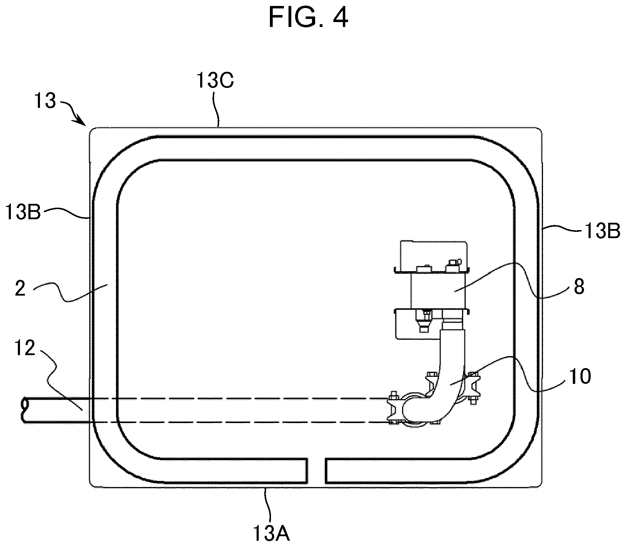

For example, as illustrated in FIG. 4, the air heat exchanger 2 may be provided over a portion of the front surface 13A of the housing 13 and an entire surface of the left and right side surfaces 13B and the back surface 13C. Since the local water pipes 12 are disposed in the lower part of the bottom base 9, it is possible to improve heat exchange efficiency due to an increased heat-transfer area while securing a portion of the front surface 13A as a maintenance surface.

## Claims

1. A refrigerating apparatus (20) comprising:
a refrigerating cycle unit including a compressor (5), an air heat exchanger (2), a blower (4), a decompressor (7), and a water heat exchanger (8); and
a housing (13) that accommodates the refrigerating cycle unit, wherein
the housing (13) has a bottom base (9) in which the water heat exchanger (8) is disposed and in which a piping opening (18) for passing water pipes connected to the water heat exchanger (8) is formed.

2. The refrigerating apparatus according to claim 1, wherein
the housing (13) has a front surface as a maintenance surface, left and right side surfaces, and a back surface, and
the air heat exchanger (2) is provided over an entire surface of the left and right side surfaces and the back surface of the housing (13).

3. The refrigerating apparatus according to claim 1, wherein
the housing (13) has a front surface as a maintenance surface, left and right side surfaces, and a back surface, and
the air heat exchanger (2) is provided over a portion of the front surface and an entire surface of the left and right side surfaces and the back surface of the housing (13).
